# EUROPÄISCHE PATENTSCHRIFT

(11) **EP 1 907 800 B1**
(45) Veröffentlichungstag und Bekanntmachung des Hinweises auf die Patenterteilung: **19.05.2010**
(21) Anmeldenummer: 06777856.3
(22) Anmeldetag: 20.07.2006
(51) Int. Cl.: G01D 5/39

(54) **VERFAHREN ZUM BETREIBEN EINES DIGITALEN SENSORS**
METHOD FOR OPERATING A DIGITAL SENSOR
PROCÉDÉ PERMETTANT DE FAIRE FONCTIONNER UN DÉTECTEUR NUMÉRIQUE

(30) Priorität: 25.07.2005 DE 102005034672
(43) Veröffentlichungstag der Anmeldung: 09.04.2008
(73) Patentinhaber: Continental Automotive GmbH, 30165 Hannover (DE)
(72) Erfinder: WIESE, Peter, 65779 Kelkheim (DE)
(86) Internationale Anmeldenummer: PCT/EP2006/064447
(87) Internationale Veröffentlichungsnummer: WO 2007/012596

(56) Entgegenhaltungen:
- DE-A1- 4 324 197
- DE-A1- 19 946 917

## Beschreibung

Die Erfindung bezieht sich auf ein Verfahren zum Betreiben eines digitalen Sensors. Verfahren zum Betreiben von digitalen Sensoren sind bekannt. In "Discrete Semiconductors, DATA SHEET, KMI 15/1, Integrated rotational speed sensor, PHILIPS, 05. September 2000, S. 1-16" werden digitale. Sensoren beschrieben. Sie sind lediglich mit zwei Kontakten versehen und weisen in ihrem Inneren eine schaltbare Stromquelle auf, bei der es sich um die Anordnung eines Transistors handeln kann. Eine solche Anordnung ist speziell auf Seite 5 in Fig. 4 Block diagram dargestellt. Bei diesen digitalen Sensoren werden die Sensorelemente beim Verfahren zum Betreiben des digitalen Sensors dauerhaft bestromt. Bei diesen bekannten Verfahren ist nachteilig, dass ein Hinzuschalten einer zusätzlichen Last zu thermischen Problemen führen kann, zumal dann teilweise hohe elektrische Ströme zu verzeichnen sind.

Als weiterer Stand der Technik sind die DE 199 46 917 A1, die einen Analogsensor beschreibt, der zur Energieeinsparung zeitweise abschaltbar ist, die DE 43 24 197 A1, bei der über vier Kontakte eine Taktleitung und eine Datenleitung vorgesehen sind und kein Schalter vorhanden ist, sowie die US 4,549,180 und die US 4,751,654 zu nennen, bei welchen wechselweise drei bzw. zwei Sensoren von Strom durchflossen sind.

Der Erfindung liegt daher die Aufgabe zugrunde, ein Verfahren zum Betreiben eines digitalen Sensors zu schaffen, bei dem diese thermischen Probleme weitgehend vermieden werden. Gleichzeitig sollen die Verlustleistung und die Stromaufnahme weitgehend minimiert werden.

Die der Erfindung zugrunde liegende Aufgabe wird durch ein Verfahren zum Betreiben eines digitalen Sensors gelöst, der nur einen ersten Kontakt und einen zweiten Kontakt aufweist, bei dem in einem ersten Schritt die Bestromung des Sensorelementes bei gleichzeitigem Messen der Messgröße über einen geschlossenen Schalter erfolgt, der Messwert anschließend in einem zweiten Schritt bei geöffnetem Schalter in einem Analog-Digital-Wandler in ein digitales Signal umgewandelt und dieses in einem, dem Analog-Digital-Wandler nachgeschalteten digitalen Schaltwert in einen digitalen Ausgabewert transformiert wird, bei dem in einem dritten Schritt der digitale Ausgabewert über den ersten Kontakt und den zweiten Kontakt bei, je nach dem binären-Aufbau des digitalen Ausgabewertes, geöffnetem oder geschlossenem Schalter seriell gesendet wird, wobei gewählt wird, ob der Schalter bei der Bit-Information 1 oder der Bit-Information 0 geöffnet ist. Unter dem digitalen Sensor ist ein Sensor zu verstehen, bei dem die Anordnung eines digitalen Schaltwerks vorgesehen ist. Der erste Kontakt und der zweite Kontakt dienen sowohl der Stromversorgung des Sensors als auch der Übertragung beziehungsweise dem Senden von digitalen Ausgabewerten. Bei dem Sensorelement handelt es sich um einen Messfühler. Dabei kann es sich beispielsweise um einen Temperaturfühler handeln. Als Schalter kann beispielsweise ein Transistor eingesetzt werden. Dadurch, dass das Signal in digitalisierter Form vorliegt, kann es vor der Umwandlung in einen seriellen Datenstrom im digitalen Schaltwerk vorteilhaft linearisiert werden. Die Reihenfolge aus erstem bis drittem Schritt des Verfahrens wird beliebig oft wiederholt, je nach gewünschter Messfolge. Es hat sich in überraschender Weise gezeigt, dass durch das Verfahren thermische Probleme nahezu vollständig vermieden werden können. Darüber hinaus kann auf die Anordnung einer schaltbaren Stromquelle, wie dies nach dem Stand der Technik vorgesehen ist, in vorteilhafter Weise verzichtet werden. Gleichzeitig werden die Verlustleistung und die Stromaufnahme in vorteilhafter Weise minimiert. Durch die absatzweise erfolgende Unterbrechung der Bestromung des Sensorelementes wird dieses in vorteilhafter Weise geschont, was die Lebensdauer des digitalen Sensors erhöht.

Eine bevorzugte Ausgestaltung der Erfindung besteht darin, dass der Schalter im zweiten Schritt nach erfolgter Wandlung des Messwertes im Analog-Digital-Wandler zunächst geöffnet wird und erst wieder geschlossen wird, wenn der vom digitalen Schaltwerk zu Senden anstehende digitale Ausgabewert ein Anheben des Strompegels erfordert. Dabei ist vorteilhaft, dass auch bei der Verarbeitung des Messwertes im Analog-Digital-Wandler oder im nachgeschalteten digitalen Schaltwerk eine Bestromung des Sensorelementes unterbleibt, so dass thermische Probleme vollständig vermieden werden.
Eine weitere bevorzugte Ausgestaltung der Erfindung besteht darin, dass das Messen der Messgröße mit als Sensorelement angeordneten Messbrücken erfolgt, und der Messwert über einen Differenzverstärker dem Analog-Digital-Wandler zugeführt wird. In der Regel werden dabei zwei Messbrücken eingesetzt, die jeweils magnetfeldabhängige Widerstände aufweisen. Dabei ist vorteilhaft, dass Drehwinkelpositionen von Drosselklappen in Drosselklappenstutzen bestimmt werden können, wobei gleichzeitig eine größere Stromaufnahme im digitalen Sensor vorteilhaft vermieden werden kann.

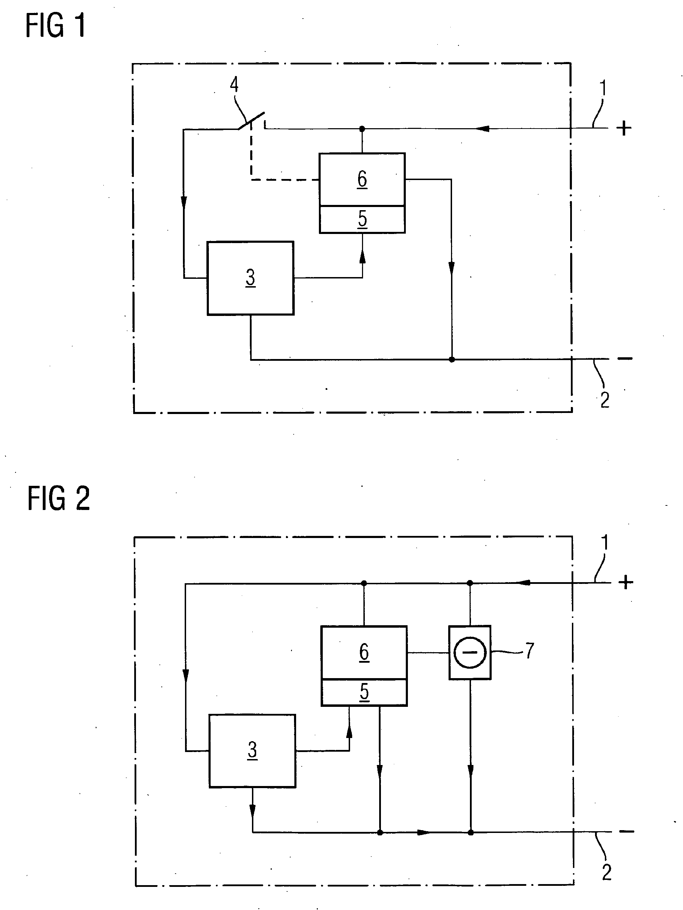

Die Erfindung wird nachfolgend anhand der Zeichnung (Fig. 1, Fig. 2) näher und beispielhaft erläutert.
- Fig. 1: zeigt ein Blockschaltbild zum Verfahren zum Betreiben eines digitalen Sensors.
- Fig. 2: zeigt ein Blockschaltbild zum Verfahren zum Betreiben eines digitalen Sensors nach dem Stand der Technik.

In Fig. 1 ist ein Blockschaltbild zum Verfahren zum Betreiben eines digitalen Sensors schematisch vereinfacht dargestellt. Der Sensor weist einen ersten Kontakt 1 und einen zweiten Kontakt 2 auf. Im ersten Schritt des Verfahrens zum Betreiben eines digitalen Sensors erfolgt die Bestromung des Sensorelementes 3 bei gleichzeitigem Messen der Messgröße über einen geschlossenen Schalter 4, der in Fig. 1 in geöffnetem Zustand dargestellt ist. Der ermittelte Messwert wird anschließend in einem zweiten Schritt in einem Analog-Digital-Wandler 5 in ein digitales Signal umgewandelt. Dieses digitale Signal wird in einem, dem Analog-Digital-Wandler 5 nachgeschalteten digitalen Schaltwerk 6 in einen digitalen Ausgabewert transformiert. In einem dritten Schritt wird dieser digitale Ausgabewert über den ersten Kontakt 1 und den zweiten Kontakt 2 bei, je nach dem binären Aufbau des digitalen Ausgabewertes, geöffnetem oder geschlossenem Schalter 4 seriell gesendet. Dabei ist natürlich entsprechend zu wählen, ob der Schalter 4 bei der Bit-Information 1 oder bei der Bit-Information 0 geöffnet ist. Auf die Anordnung einer schaltbaren Stromquelle kann bei diesem Verfahren vorteilhaft verzichtet werden. Es ist jedoch auch möglich, zusätzlich im digitalen Sensor eine Verpolschutzdiode (nicht dargestellt) oder einen Spannungsregler (nicht dargestellt) anzuordnen, was jedoch nicht zwingend erforderlich ist und in der Regel vom Kundenwunsch abhängig ist. Als Sensorelement 3 kann beispielsweise eine Anordnung von zwei Messbrücken (nicht dargestellt) vorgesehen sein, wobei der Messwert dann über einen Differenzverstärker (nicht dargestellt) dem Analog-Digital-Wandler 5 zugeführt werden muss.

In Fig. 2 ist ein Blockschaltbild zum Verfahren zum Betreiben eines digitalen Sensors nach dem Stand der Technik dargestellt. Im Gegensatz dem in Fig. 1 dargestellten Blockschaltbild wird nach dem Stand der Technik auf die Anordnung eines Schalters hierbei gänzlich verzichtet, was zur Folge hat, dass das Sensorelement 3 im Verfahren zum Betreiben des digitalen Sensors nach dem Stand der Technik kontinuierlich bestromt wird. Ferner ist es nach dem Stand der Technik vorgesehen, eine schaltbare Stromquelle 7 in entsprechender Weise anzuordnen, wobei es sich beispielsweise um die Anordnung eines Transistors handeln kann. Dabei ist nachteilig, dass beim Verfahren zum Betreiben des digitalen sensors nach dem Stand der Technik eine relativ große stromaufnahme zu verzeichnen ist, wodurch es nach relativ kurzen Betriebszeiten zu nachteiligen thermischen Problemen kommt.

## Patentansprüche

1. Verfahren zum Betreiben eines digitalen Sensors, der nur einen ersten Kontakt (1) und einen zweiten Kontakt (2) aufweist, bei dem in einem ersten Schritt die Bestromung des Sensorelementes (3) bei gleichzeitigem Messen der Messgröße über einen geschlossenen Schalter (4) erfolgt, der Messwert anschließend in einem zweiten Schritt in einem Analog-Digital-Wandler (5) in ein digitales Signal umgewandelt und dieses in einem, dem Analog-Digital-Wandler (5) nachgeschalteten digitalen Schaltwerk (6) in einen digitalen Ausgabewert transformiert wird, bei dem in einem dritten Schritt der digitale Ausgabewert über den ersten Kontakt (1) und den zweiten Kontakt (2) bei, je nach dem binären Aufbau des digitalen Ausgabewertes, geöffnetem oder geschlossenem Schalter (4) seriell gesendet wird, wobei gewählt wird, ob der Schalter (4) bei der Bit-Information 1 oder der Bit-Information 0 geöffnet ist.

2. Verfahren nach Anspruch 1, bei dem der Schalter (4) im zweiten Schritt nach erfolgter Wandlung des Messwertes im Analog-Digital-Wandler (5) zunächst geöffnet wird und erst wieder geschlossen wird, wenn der vom digitalen Schaltwert (6) zu Senden anstehende digitale Ausgabewert ein Anheben des Strompegels erfordert.

3. Verfahren nach Anspruch 1 oder Anspruch 2, bei dem das Messen der Messgröße mit als Sensorelement (3) angeordneten Messbrücken erfolgt, und der Messwert über einen Differenzverstärker dem Analog-Digital-Wandler (5) zugeführt wird.

## Claims

1. Method for operating a digital sensor which has only a first contact (1) and a second contact (2), in which, in a first step, the sensor element (3) is energized while simultaneously measuring the measurement variable by means of a closed switch (4), in a second step the measured value is subsequently converted into a digital signal in an analogue-to-digital converter (5) and said digital signal is transformed into a digital output value in a digital switching mechanism (6) connected downstream of the analogue-to-digital converter (5), in which, in a third step, the digital output value is serially transmitted via the first contact (1) and the second contact (2) with the switch (4) open or closed depending on the binary structure of the digital output value, wherein a choice is made as to whether the switch (4) is open in the case of the bit information 1 or the bit information 0.

2. Method according to Claim 1, in which, in the second step, after the measured value has been converted in the analogue-to-digital converter (5), the switch (4) is firstly opened and is only closed again if the digital output value present for transmission from the digital switching mechanism (6) requires a raising of the current level.

3. Method according to Claim 1 or Claim 2, in which the measurement variable is measured by means of measuring bridges arranged as sensor element (3) and the measured value is fed to the analogue-to-digital converter (5) via a differential amplifier.

## Revendications

1. Procédé permettant de faire fonctionner un capteur numérique qui n'a qu'un premier contact (1) et un deuxième contact (2), procédé au cours duquel, dans une première étape, la mise sous courant de l'organe capteur (3) est assurée pendant qu'on mesure simultanément la valeur de mesure à travers un commutateur (4) fermé, ensuite, au cours d'une deuxième étape, la valeur de mesure est transformée en un signal numérique dans un convertisseur analogique/numérique (5) et ce signal numérique est transformé, dans un système numérique de commutation (6) monté en aval du convertisseur analogique/numérique (5), en une valeur de sortie numérique, procédé au cours duquel, au cours d'une troisième étape, la valeur de sortie numérique est émise en procédure sérielle par l'intermédiaire du premier contact (1) et du deuxième contact (2) lorsque, en fonction de la structure binaire de la valeur de sortie numérique, le commutateur (4) est ouvert ou fermé, avec une sélection en fonction du fait que le commutateur (4) est ouvert sous l'information binaire 1 ou sous l'information binaire 2.

2. Procédé selon la revendication 1, au cours duquel le commutateur (4), lors de la deuxième étape, après la conversion de la valeur de mesure dans le convertisseur analogique/numérique (5), est d'abord ouvert et n'est refermé que lorsque la valeur de sortie numérique prête à être émise par le système de commutation (6) nécessite une augmentation du niveau de courant.

3. Procédé selon la revendication 1 ou la revendication 2, au cours duquel la mesure de la valeur de mesure a lieu avec des ponts de mesure montés en tant qu'organe capteur (3) et la valeur de mesure est appliquée au convertisseur analogique/ numérique (5) par 1"intermédiaire d'un amplificateur différentiel.
